Europäisches Patentamt

European Patent Office

Office européen des brevets

(19)

(11) Publication number: **0 334 605**
**A2**

## EUROPEAN PATENT APPLICATION

(12)

(21) Application number: **89302796.1**

(22) Date of filing: **21.03.89**

(51) Int. Cl.4: **G 06 F 15/20**

(30) Priority: **23.03.88 JP 69144/88**

(43) Date of publication of application:
**27.09.89 Bulletin 89/39**

(84) Designated Contracting States: **DE FR GB IT**

(71) Applicant: **BROTHER KOGYO KABUSHIKI KAISHA**
**35, 9-chome, Horita-dori Mizuho-ku**
**Nagoya-shi, Aichi-ken (JP)**

(72) Inventor: **Kawakami, Yasushi Brother Kogyo Kabushiki**
**Kaisha**
**35, Horita-dori 9-chome Mizuho-ku**
**Nagoya-shi Aichi-ken (JP)**

**Hirata, Keiichi Brother Kogyo Kabushiki Kaisha**
**35, Horita-dori 9-chome Mizuho-ku**
**Nagoya-shi Aichi-ken (JP)**

**Miura, Tomoko Brother Kogyo Kabushiki Kaisha**
**35, Horita-dori 9-chome Mizuho-ku**
**Nagoya-shi Aichi-ken (JP)**

**Mukai, Miyako Brother Kogyo Kabushiki Kaisha**
**35, Horita-dori 9-chome Mizuho-ku**
**Nagoya-shi Aichi-ken (JP)**

**Sakakibara, Hisao Brother Kogyo Kabushiki Kaisha**
**35, Horita-dori 9-chome Mizuho-ku**
**Nagoya-shi Aichi-ken (JP)**

**Otsuka, Naoki Brother Kogyo Kabushiki Kaisha**
**35, Horita-dori 9-chome Mizuho-ku**
**Nagoya-shi Aichi-ken (JP)**

(74) Representative: **Senior, Alan Murray et al**
**J.A. KEMP & CO 14 South Square Gray's Inn**
**London WC1R 5EU (GB)**

(54) Documentation system capable of displaying guidance.

(57) A documentation system capable of displaying guidance, comprising a display device having a screen capable of displaying at least one line of text data as well as the guidance indicative of information of the text data; a text memory for storing the text data and line information of the text data; data accessing means for accessing the text data stored in the text memory at an arbitrary address; predetermined line judging means for judging whether or not the data accessing means has accessed the text data stored at the address corresponding to a predetermined line according to the line information stored in the text memory; and display control means for controlling display of the text data and the guidance in such a manner that when the predetermined line judging means judges that the data accessing means has accessed the text data at the address corresponding to the predetermined line, the guidance is displayed in substitution for the text data having been displayed on the screen, while when the predetermined line judging means judges that the data accessing means has accessed the text data at any address other than the address corresponding to the predetermined line under a display control with guidance, a guidance area where the guidance has been displayed on the screen is replaced by a text area for displaying the text data on the screen.

FIG.1

EP 0 334 605 A2

## Description

## DOCUMENTATION SYSTEM CAPABLE OF DISPLAYING GUIDANCE

The present invention relates to a documentation system capable of displaying guidance indicative of information such as a page number, line number, column number and/or a character size concerning a text data being displayed on a screen.

In a conventional documentation system such as a word processor and an electronic typewriter having a screen, a guidance line for displaying the guidance is provided by using one of plural lines displayable on the screen.

However, in the conventional documentation system, it is general that the guidance line is always displayed on the screen. According to this type of documentation system, the lines for displaying the text data are reduced by the guidance line, causing a difficulty of grasping the condition of the text data especially when the screen is small.

To solve this problem, another type of documentation system designed to select on/off state of the guidance has been proposed. In this type of documentation system, the guidance can be turned off from the screen as required to thereby increase the lines for displaying the text data by the guidance line. However, an operator must carry out on/off operation of the guidance every time he requires to confirm the information of the text data. This type of documentation system is disclosed in U.S. patent No. 4.195,353 and European patent No. 197700, for example.

It is a first aim the present invention to provide a documentation system capable of displaying guidance which enables an operator to easily grasp the condition of the text data by the guidance even in a small screen having a limited number of displayable lines.

It is a second aim of the present invention to provide a documentation system capable of displaying guidance which eliminates a selecting operation of guidance display.

According to the present invention, there is provided a documentation system capable of displaying guidance, comprising a display device having a screen capable of displaying at least one line of text data as well as said guidance indicative of information of said text data; a text memory for storing said text data and line information of said text data; data accessing means for accessing said text data stored in said text memory at an arbitrary address; predetermined line judging means for judging whether or not said data accessing means has accessed said text data stored at said address corresponding to a predetermined line according to said line information stored in said text memory; and display control means for controlling display of said text data and said guidance in such a manner that when said predetermined line judging means judges that said data accessing means has accessed said text data at said address corresponding to said predetermined line, said guidance is displayed in substitution for said text data having been displayed on said screen, while when said predetermined line judging means judges that said data accessing means has accessed said text data at any address other than said address corresponding to said predetermined line under a display control with guidance, a guidance area where said guidance has been displayed on said screen is replaced by a text area for displaying said text data on said screen.

As mentioned above, when the address of the text data corresponding to the predetermined line in the text memory is accessed by the data accessing means, the guidance is displayed in substitution for the text data having been displayed on the screen. For instance, in the case that the predetermined line is a top line of each page of the text data, the guidance is displayed on the screen every time said text data accessing means accesses the top line of any page. The text data may be accessed by moving a cursor on the screen displaying the text data. On the contrary, when the cursor is not positioned at the top line of any page, the guidance is not displayed on the screen.

When the guidance is not displayed on the screen, the text area may be increased by the guidance area, thereby allowing the whole screen to be effectively used for creating or editing the text. Moreover, when the location corresponding to the predetermined line is accessed, the text area is automatically replaced by the guidance area, thereby obtaining necessary information for creating or editing the text at suitable intervals.

The invention will be more fully understood from the following detailed description and appended claims when taken with the drawings.

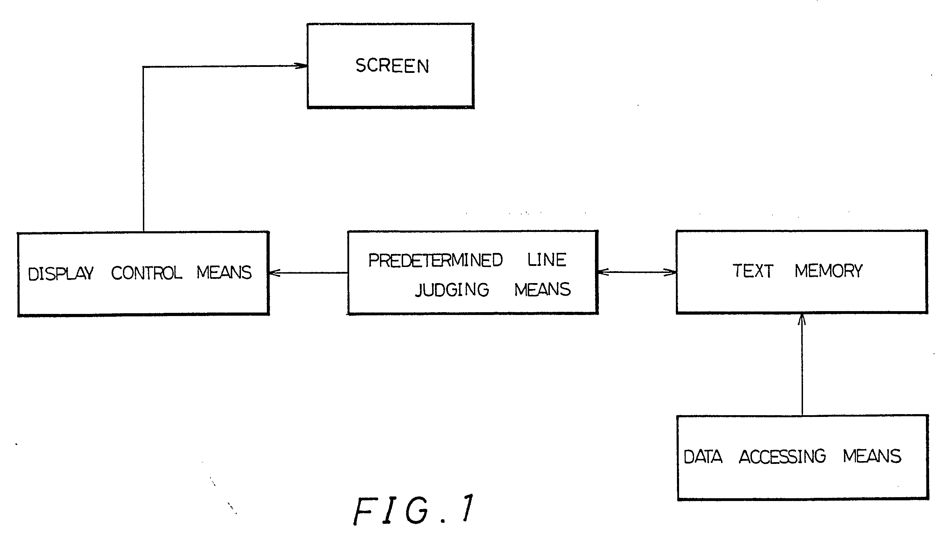

Fig. 1 is a schematic block diagram of the concept of the present invention;

Fig. 2 is a perspective view of an electronic typewriter according to a preferred embodiment of the pressent invention;

Fig. 3 is a block diagram of a circuit diagram for controlling the electronic typewriter;

Figs. 4A and 4B are schematic illustrations of a part of the screen in different display modes; and

Fig. 5 is a flow chart of control operation of guidance display according to the preferred embodiment of the present invention.

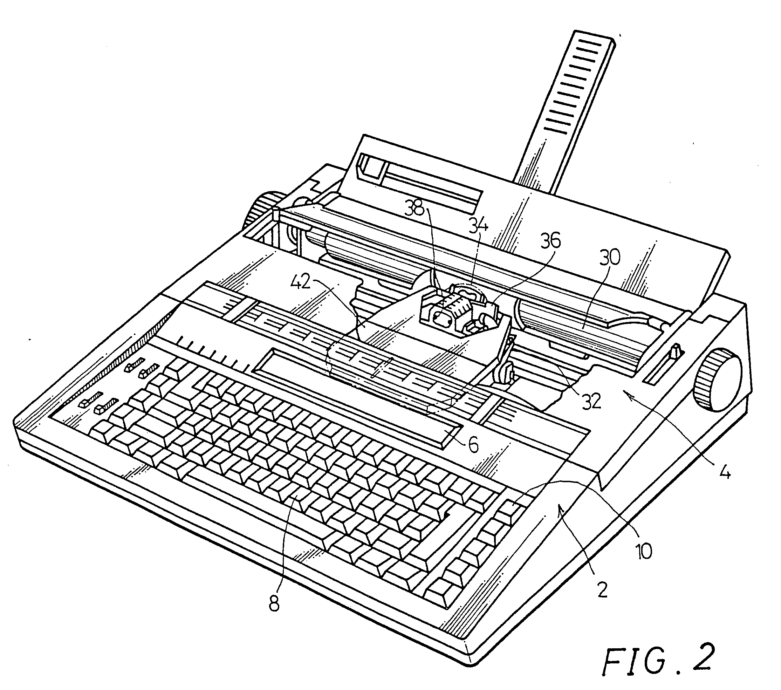

There will now be described a preferred embodiment of the present invention with reference to Figs. 2 to 5, wherein the present invention is applied to an electronic typewriter.

Referring to Fig. 2, the electronic typewriter is generally constructed of a keyboard 2, a printing mechanism 4 and a liquid crystal display 6 capable of displaying a predetermined number of lines (e.g., two lines) of characters or the like.

The keyboard 2 includes a plurality of character keys 8 such as letter keys, numeral keys and symbol keys, and also includes a plurality of function keys such as guidance on/off key 10, end key (not numbered) and cursor moving keys (not numbered) including cursor keys, scroll keys, return key, page changing key, text top designating key, text end designating key, etc.

The printing mechanism 4 includes a platen 30 for retaining and feeding a paper and a carriage 32 movable along the platen 30. The carriage 32 carries a wheel cassette 36 containing a type wheel 34, a solenoid 38 for driving a printing hammer, a ribbon cassette 42 containing a printing ribbon, etc. When any character key is depressed, a type of the type wheel 34 corresponding to the character key depressed is selected by rotation of the type wheel 34, and the type is hammered by the printing hammer against the printing ribbon, thereby obtaining a printed character on the paper. Then, the carriage 32 is moved along the platen 30 by one pitch.

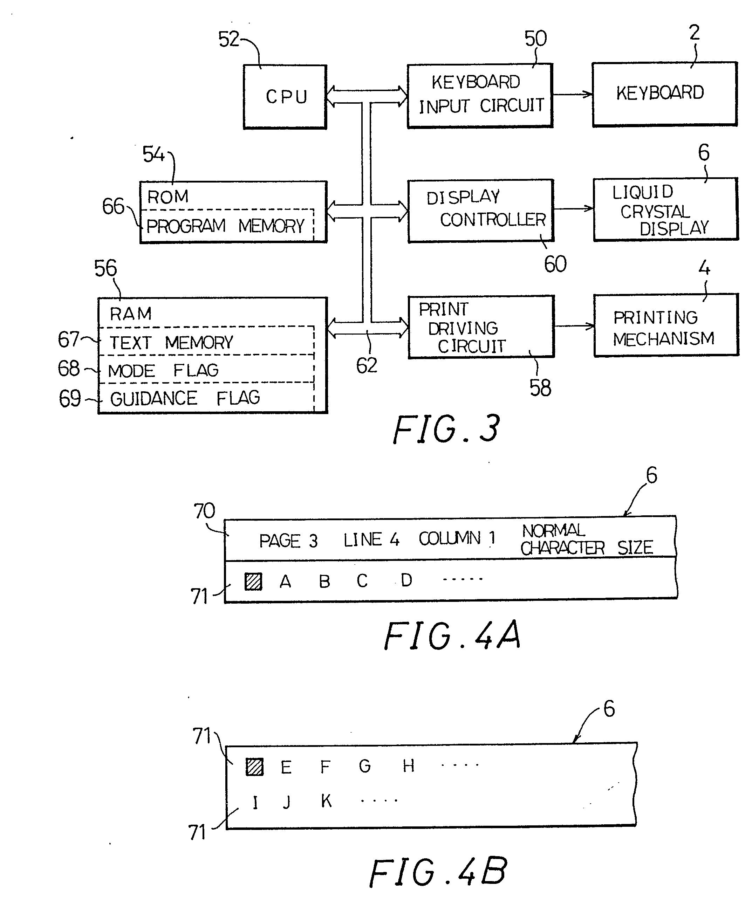

Referring next to Fig. 3 which shows a block diagram of a control circuit for controlling the electronic typewriter.

The keyboard 2 is connected through a keyboard input circuit 50 to a CPU 52, so that a key code corresponding to any key of the keyboard 2 operated is supplied to the CPU 52. The CPU 52 is also connected through a common bus 62 to ROM 54, RAM 56, print driving circuit 58 and display controller 60.

The ROM 54 includes a program memory 66 storing various control programs for controlling the electronic typewriter.

The RAM 56 includes a text memory 67, mode flag 68 and guidance flag 69 which will be hereinafter described. The RAM 56 also includes a buffer, register, counter, etc.

The print driving circuit 58 receives from the CPU 52 a carriage moving signal and a type selecting signal corresponding to a character to be printed, and controls the driving motors for driving the carriage 32 and the type wheel 34 according to the carriage moving signal and the type selecting signal.

The display controller 60 is connected to a liquid crystal display 6 to display characters on the liquid crystal display 6, and includes a character generator storing many character dot patterns corresponding to character code data.

In the electronic typewriter as mentioned above, text data are inputted by depressing the character keys 8 or the like of the keyboard 2, and are stored in the text memory 67. At the same time, information relating to the number of lines of the text data inputted into the text memory 67 is also stored in the text memory 67. In the preferred embodiment, when the number of lines becomes a predetermined value, the number of pages is incremented, and the number of lines is initialized. This processing is executed by the program in the program memory 66. As this program is similar to that in a known electronic typewriter, the detailed explanation will be omitted herein. After the text data are inputted to the text memory 67, the text data at a given address in the text memory 67 may be accessed by moving the cursor moving keys with respect to the text data displayed on the screen of the display. Thereafter, the text data at the address may be edited. As this processing is also usual, the detailed explanation will be omitted herein.

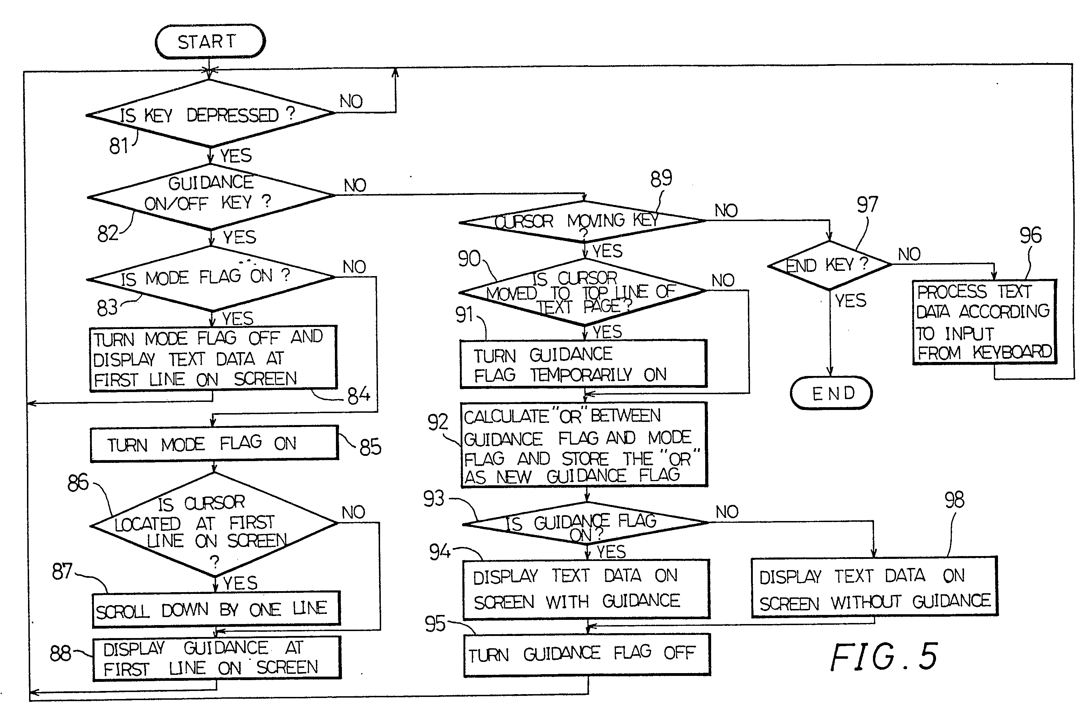

Referring next to Fig. 5 which shows a flow chart of the control program stored in the program memory 66 in the ROM 56 for controlling the display of guidance indicative of a page number, line number, column number, etc.

In step 81, it is determined whether or not any key of the keyboard 2 has been depressed. If YES, it is determined in step 82 whether or not the key depressed is a guidance on/off key 10. If YES, it is determined in step 83 whether or not a mode flag is on. The mode flag is a flag for indicating selection of either of a normal display mode wherein the guidance is always displayed on the liquid crystal display 6 or an optional display mode wherein the guidance is not always displayed on the liquid crystal display 6 but is displayed under a certain condition to be hereinafter described. Namely, the mode flag is in an on-state in the normal display mode, while it is in an off-state in the optional display mode.

In step 83, it is determined whether or not the mode flag is on. If YES in step 83, the program proceeds to step 84, and the mode flag is turned off to display text data at a first line on the screen where the guidance has been displayed. If NO in step 83, the program proceeds to step 85, and the mode flag is turned on. Thus, the selection of the normal display mode and the optional display mode can be cyclically executed by sequentially depressing the guidance on/off key 10.

After the mode flag is turned on in step 85, it is determined in step 86 whether or not the cursor is located at the first line on the screen. If YES in step 86, the text data being displayed at the first line on the screen is scrolled down by one line to move the cursor to a second line on the screen. Then in step 88, the guidance is displayed at the first line on the screen. If NO in step 86, the step 87 is skipped and the program proceeds to step 88.

According to the processing of steps 82 to 88, when the guidance on/off key 10 is depressed in the normal display mode, the normal display mode is changed to the optional display mode, while when the guidance on/off key 10 is depressed in the optional display mode, the optional display mode is changed to the normal display mode.

If NO in step 82, that is, when any key other than the guidance on/off key 10 is depressed in creating or editing a text, display control of the guidance is executed in accordance with the processing of step 89 and the subsequent steps.

First, if NO in step 82, the program proceeds to step 89 wherein it is determined whether or not the key depressed is a cursor moving key. The cursor moving key includes keys for moving the cursor position with respect to the text data being displayed on the screen, such as cursor keys, scroll keys, return key, page changing key, text top designating key, text end designating key, etc.

If NO in step 89, the program proceeds to step 97 wherein it is determined whether or not the key depressed is the end key. If the key depressed is not the end key, various processings such as displaying of characters, storing of text data and function operation are performed according to input from the keyboard in step 96. If the key depressed is the end key, the program is ended.

If YES in step 89, that is, it is determined that the key depressed is the cursor moving key, it is determined in step 90 whether or not the cursor has been moved to a predetermined line. In this embodiment, the predetermined line is set to be a top line of each text page. If YES in step 90, a guidance flag is temporarily turned on in step 91. If NO in step 90, step 91 is skipped, and the guidance flag remains off because it will be in an off-state in step 95 to be hereinafter described. After execution of step 91, the program proceeds to step 92 wherein OR between the guidance flag set in step 91 or 95 and the mode flag set in step 84 or 85 is calculated, and the OR is stored as a new guidance flag. That is, the guidance flag is reset to the value of OR. Accordingly, the guidance flag obtained in step 92 is turned on when the cursor is located at the top line of the text page in the optional display mode, or the mode flag is on in the normal display mode.

The guidance flag set in step 92 is used as a flag for indicating whether or not the guidance is displayed at the first line of the screen. When the guidance flag is on. a guidance line 70 as shown in Fig. 4A is used for displaying the guidance at the first line on the screen of the liquid crystal display 6 instead of the text data being displayed at the first line, and the other line 71 is used for displaying the text data. Such display control will be hereinafter referred to as display control with guidance. On the other hand, when the guidance flag set in step 93 is off, the guidance is not displayed but the text data is displayed at all the lines on the screen as shown in Fig. 4B. Such display control will be hereinafter referred to as display control without guidance.

In step 93, it is determined whether or not the guidance flag is on. If YES in step 93, the program proceeds to step 94 wherein the display control with guidance as mentioned with reference to Fig. 4A is executed. On the other hand, if NO in step 93, the program proceeds to step 98 wherein the display control without guidance as mentioned above with reference to Fig. 4B is executed. Then, in step 95, the guidance flag is turned off, and the program is returned to step 81 wherein the next key input is awaited.

As mentioned above, the operator can switch the normal display mode to the optional display mode and vice versa by depressing the guidance on/off key 10. When the normal display mode is selected, the guidance is always displayed. On the other hand, in the optional display mode, when the cursor is located at the top line of each text page, the guidance is automatically displayed. Accordingly, when the cursor is located at any line other than the top line of the text page in the optional display mode, the whole screen of the liquid crystal display 6 can be used for the text data, thereby enabling the operator to easily grasp the condition of the text. Once the cursor is moved to the top line of the text page. the display line of the text data at the first line is replaced by the guidance line, thus automatically providing information necessary for creating or editing the text.

Although the preferred embodiment includes the normal display mode, it may be eliminated, and the guidance may be selectively displayed in the optional display mode only. Further, the predetermined line may be set to any line other than the top line of each text page, such as a bottom line of each text page or specific lines at five-line intervals. Further, although the guidance is displayed at a first line on the screen in the preferred embodiment, it may be displayed under any conditions other than the guidance line, such as at a right or left end area of the screen. Further, the present invention may be applied to a word processor.

Having thus described the preferred embodiment of the invention, it should be understood that numerous structural modifications and adaptations may be made without departing from the spirit of the invention.

## Claims

1. A documentation system capable of displaying guidance, comprising:
a display device (6,60) having a screen (6) capable of displaying at least one line of text data (71) as well as said guidance (70) indicative of information of said text data;
a text memory (67) for storing said text data and line information of said text data;
data accessing means for accessing said text data stored in said text memory (67) at an arbitrary address;
characterised in that it further comprises:
predetermined line judging means for judging whether or not said data accessing means has accessed said text data stored at said address corresponding to a predetermined line according to said line information stored in said text memory; and
display control means for controlling display of said text data (71) and said guidance (70) in such a manner that when said predetermined line judging means judges that said data accessing means has accessed said text data at said address corresponding to said predetermined line, said guidance (70) is displayed in substitution for said text data (71) having been displayed on said screen (6), while when said predetermined line judging means judges that said data accessing means has accessed said text data at any address other than said address corresponding to said predetermined line under a display control with guidance, a guidance area where said guidance (70) has been displayed on said screen is replaced by a text area (71) for displaying said text data on said screen.

2. A documentation system as defined in claim 1, wherein said data accessing means includes a cursor moving key relating to movement of a cursor with respect to said text data being displayed on said screen.

3. A documentation system as defined in claim 1 or 2, wherein said predetermined line is a top line of a page of said text data.

4. A documentation system as defined in claim 1, 2 or 3, wherein said display control means executes scrolling down of one line of said text data being displayed on said screen (6) when said data accessing means accesses said text data at said address corresponding to said predetermined line and said text data accessed by said data accessing means is displayed at a first line on said screen.

5. A documentation system as defined in any one of claims 1 to 4, wherein said display control means has a guidance flag (69) adapted to be switched on when said data accessing means accesses said text data at said address corresponding to said predetermined line, and wherein when said guidance flag (69) is in an on-state, said guidance (70) is displayed on said screen (6).

6. A documentation system as defined in claim 5, wherein said display control means has a mode flag (68) adapted to be switched on and off by depressing a predetermined key (10) and wherein when said mode flag (68) is in an on-state, or when said guidance flag (69) is in an on-state, said guidance (70) is displayed on said screen (6).

FIG.1

EP 0 334 605 A2

FIG. 2

FIG.3

FIG.4A

FIG.4B

FIG.5